(19) **Europäisches Patentamt European Patent Office Office européen des brevets**

(11) **EP 3 759 687 B1**

(12) **FASCICULE DE BREVET EUROPEEN**

(45) Date de publication et mention de la délivrance du brevet:
**30.03.2022 Bulletin 2022/13**

(21) Numéro de dépôt: **18708651.7**

(22) Date de dépôt: **28.02.2018**

(51) Classification Internationale des Brevets (IPC):
**G06T 7/32** *(2017.01)*    **G06T 7/00** *(2017.01)*
**G01B 15/06** *(2006.01)*    **G01N 3/08** *(2006.01)*
**G01M 5/00** *(2006.01)*    **G01M 11/08** *(2006.01)*
**G01B 11/16** *(2006.01)*

(52) Classification Coopérative des Brevets (CPC):
**G06T 7/32; G01B 11/16; G01M 5/005;**
**G01M 11/081; G06F 30/20; G06T 7/001;**
G01B 15/06; G01N 3/08; G01N 2223/607;
G06F 30/23; G06F 2111/10; G06T 2207/10012;
G06T 2207/10072; G06T 2207/30108;
G06T 2207/30164

(86) Numéro de dépôt international:
**PCT/EP2018/054953**

(87) Numéro de publication internationale:
**WO 2019/166085 (06.09.2019 Gazette 2019/36)**

(54) **PROCEDE MIS EN OEUVRE PAR ORDINATEUR POUR L'IDENTIFICATION DE PROPRIETES MECANIQUES PAR CORRELATION D'IMAGES ET MODELISATION MECANIQUE COUPLEES**

COMPUTERIMPLEMENTIERTES VERFAHREN ZUR IDENTIFIZIERUNG MECHANISCHER EIGENSCHAFTEN DURCH GEKOPPELTE KORRELATION VON BILDERN UND MECHANISCHER MODELLIERUNG

COMPUTER-IMPLEMENTATED METHOD FOR IDENTIFYING MECHANICAL PROPERTIES BY COUPLED CORRELATION OF IMAGES AND MECHANICAL MODELLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**06.01.2021 Bulletin 2021/01**

(73) Titulaires:
• **Centre National de la Recherche Scientifique 75016 Paris (FR)**
• **Ecole Normale Supérieure de Cachan 94230 Cachan (FR)**

(72) Inventeurs:
• **HILD, François 92290 CHATENAY-MALABRY (FR)**
• **LECLERC, Hugo 94230 CACHAN (FR)**
• **ROUX, Stéphane 93110 ROSNY-SOUS-BOIS (FR)**

(74) Mandataire: **Marks & Clerk France Immeuble "Visium" 22, avenue Aristide Briand 94117 Arcueil Cedex (FR)**

(56) Documents cités:
• **JULIEN RÉTHORÉ ET AL: "An extended and integrated digital image correlation technique applied to the analysis of fractured samples : The equilibrium gap method as a mechanical filter", EUROPEAN JOURNAL OF COMPUTATIONAL MECHANICS = REVUE EUROPÉENNE DE MÉCANIQUE NUMÉRIQUE, vol. 18, no. 3-4, 2009, pages 285-306, XP055518802, FR ISSN: 1779-7179, DOI: 10.3166/ejcm.18.285-306**

- PAUL LEPLAY ET AL: "Identification of damage and cracking behaviours based on energy dissipation mode analysis in a quasi-brittle material using digital image correlation", INTERNATIONAL JOURNAL OF FRACTURE, KLUWER ACADEMIC PUBLISHERS, DO, vol. 171, no. 1, 4 octobre 2011 (2011-10-04), pages 35-50, XP019963505, ISSN: 1573-2673, DOI: 10.1007/S10704-011-9624-8
- JULIEN RETHORE: "A fully integrated noise robust strategy for the identification of constitutive laws from digital images", INTERNATIONAL JOURNAL OF NUMERICAL METHODS IN ENGINEERING., vol. 84, no. 6, 20 avril 2010 (2010-04-20) , pages 631-660, XP055285293, GB ISSN: 0029-5981, DOI: 10.1002/nme.2908
- AVRIL ET AL: "General framework for the identification of constitutive parameters from full-field measurements in linear elasticity", INTERNATIONAL JOURNAL OF SOLIDS AND STRUCTURES, NEW YORK, NY, US, vol. 44, no. 14-15, 30 mars 2007 (2007-03-30), pages 4978-5002, XP022009781, ISSN: 0020-7683, DOI: 10.1016/J.IJSOLSTR.2006.12.018

**Description**

Le domaine général de l'invention est celui de la science des matériaux et des structures, et plus précisément de la connaissance de leurs propriétés lorsqu'ils sont soumis à différentes sollicitations mécaniques.

Les applications industrielles principales relèvent de la résistance des matériaux. Il existe cependant d'autres domaines d'application comme le contrôle non destructif, certaines applications biologiques ou encore l'élastographie à des fins médicales.

Généralement, les mesures se font au moyen de systèmes d'essais mécaniques comportant des dispositifs d'imagerie. Ces dispositifs sont principalement des caméras ou des appareils photos fonctionnant dans les longueurs d'ondes visibles ou voisines du visible ou des systèmes d'analyse microscopique comme les microscopes électroniques à balayage ou les microscopes à force atomique. On utilise également des tomographes permettant d'analyser l'intégralité du volume d'un échantillon de matière. Il en existe différents types. On citera, de façon non exhaustive, les tomographes à rayons X, les tomographes à résonance magnétique ou « IRM » et les tomographes à cohérence optique.

Le principe général de fonctionnement de ces dispositifs à imagerie est le suivant. On réalise un certain nombre d'images représentatives de l'échantillon avant puis pendant l'application de conditions de chargement déterminées mécaniques ou thermiques, par exemple. Ces images peuvent être bidimensionnelles, stéréoscopiques ou vidéo, voire volumiques. Bien entendu, la connaissance de l'échelle de l'échantillon est indispensable si l'on veut identifier des propriétés mécaniques ayant une dimension physique.

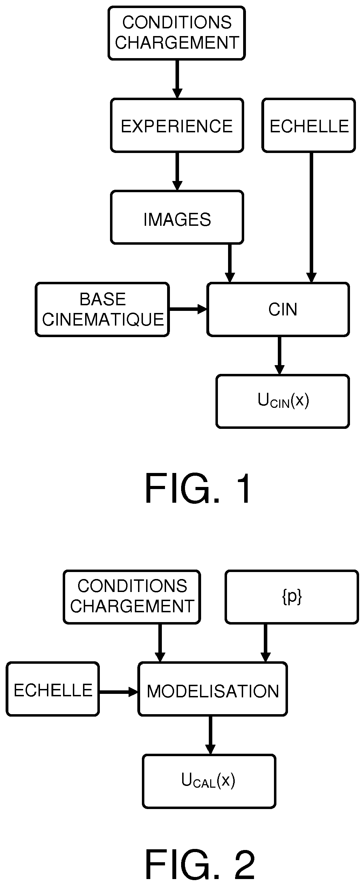

Il existe différents modes d'exploitation des images obtenues permettant de caractériser l'effet du chargement. Ces images peuvent être exploitées par corrélation d'images numériques, méthode connue sous l'appellation « CIN », ou encore « DIC », acronyme anglais signifiant « Digital Image Corrélation ». On se reportera notamment à la publication « Image corrélation for shape, motion and déformation measurements: basic concepts, theory and applications », MA Sutton, JJ Orteu, H Schreier, Springer (2009). Cette méthode consiste à décomposer le mouvement de l'échantillon sur une base cinématique représentative. Une telle base peut être une description de type « éléments finis » s'appuyant sur un maillage géométrique de l'échantillon. L'analyse des images obtenues sous chargement par rapport à celle(s) obtenue(s) hors chargement permet de mesurer le champ de déplacement $U_{CIN}(x)$ de l'échantillon sous sollicitations, x représentant les coordonnées d'un point de l'échantillon. Ce principe général de caractérisation par la méthode de corrélation d'images numériques est représenté en figure 1.

Le même essai mécanique peut être modélisé numériquement, soit par la méthode des éléments finis, soit par d'autres techniques pour calculer le champ de déplacement que l'on note alors $U_{CAL}(x)$.

La modélisation nécessite la connaissance :

- de la géométrie de l'échantillon ;
- des conditions de chargement, y compris le temps ;
- des conditions aux limites telles que la mesure des déplacements ou des efforts sur les bords des domaines ;
- des lois de comportement mécanique de l'échantillon ou des différentes phases qui le composent ;
- de la localisation précise des différentes phases, pour un milieu multiphasique.

Ces différents éléments peuvent être décrits mathématiquement via un ensemble de paramètres appelés collectivement $\{p_i\}$, i étant un indice variant de 1 à n, n étant le nombre de paramètres concernés. Ce principe général de caractérisation par la modélisation est représenté en figure 2.

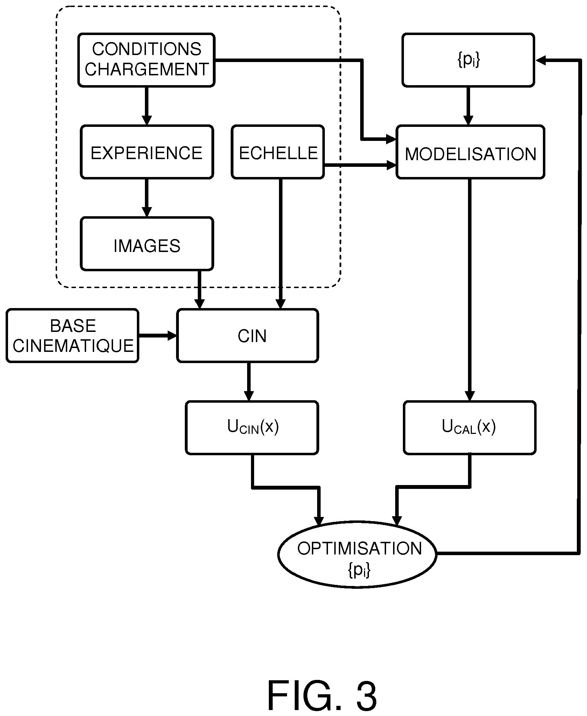

Bien entendu, la modélisation ne rend fidèlement compte des observations que si le champ de déplacement $U_{CAL}(x)$ est identique ou très voisin du champ de déplacement $U_{CIN}(x)$. Par conséquent, l'optimisation des paramètres $\{p_i\}$ est obtenue par une boucle d'itérations dans laquelle on modifie les paramètres jusqu'à ce que les deux champs de déplacements se correspondent au mieux. La figure 3 représente l'ensemble du processus de mesure, de modélisation et d'optimisation permettant de déterminer les justes paramètres.

Ce procédé comporte quelques inconvénients. En effet, les images sont toujours bruitées et la CIN est sensible à ce bruit de façon plus ou moins importante selon le choix de la base cinématique. L'effet est particulièrement prononcé sur les bords du domaine étudié. Le principal inconvénient de la modélisation est que la sensibilité du champ de déplacement par rapport à certains paramètres peut être très faible, rendant leur détermination délicate. Il peut même y avoir un effet de contamination sur l'ensemble des paramètres $\{p_i\}$. Enfin, malgré les imperfections de la mesure, ce champ est intangible pendant toute la procédure d'identification.

Afin d'optimiser le procédé, différentes méthodes ont été proposées. Ainsi, le brevet US 7 257 244 intitulé « Elastography imaging modalities for characterising properties of tissue » décrit, dans le cadre limité de l'élastographie, un procédé itératif de couplage entre la corrélation d'images et la modélisation des propriétés élastiques de l'échantillon considéré jusqu'à obtenir la meilleure coïncidence entre les images. Dans ce procédé, les conditions aux limites sont supposées connues et ne sont pas remises en cause au cours des itérations.

Une autre méthode a été proposée dans la publication de J. Réthoré intitulée « A fully integrated noise robust strategy for the identification of constitutive laws from digital images », publiée dans Int. J. Num. Meth. Eng. 84:631-660 (2010). Cette méthode associe identification et CIN, en introduisant une fonctionnelle à minimiser qui associe les deux objectifs en imposant l'identité des deux champs de déplacement. La partie d'identification se fait par la minimisation de l'écart à l'équilibre, qui est une fonctionnelle quadratique s'appuyant sur un opérateur différentiel du second ordre appliqué au déplacement. Sa minimisation fait donc intervenir un opérateur différentiel d'ordre 4 en déplacement U.

Encore d'autres méthodes ont été proposées dans les publications: JULIEN RÉTHORÉ ET AL: "An extended and integrated digital image correlation technique applied to the analysis of fractured samples : The equilibrium gap method as a mechanical filter", EUROPEAN JOURNAL OF COMPUTATIONAL MECHANICS ou REVUE EUROPÉENNE DE MÉCANIQUE NUMÉRIQUE, vol. 18, no. 3-4, 2009, pages 285-306; PAUL LEPLAY ET AL: "Identification of damage and cracking behaviours based on energy dissipation mode analysis in a quasi-brittle material using digital image correlation", INTERNATIONAL JOURNAL OF FRACTURE, KLUWER ACADEMIC PUBLISHERS, vol. 171, no. 1, 4 octobre 2011, pages 35-50; AVRIL ET AL: "General framework for the identification of constitutive parameters from full-field measurements in linear elasticity", INTERNATIONAL JOURNAL OF SOLIDS AND STRUCTURES, NEW YORK, vol. 44, no. 14-15, 30 mars 2007, pages 4978-5002.

La corrélation d'images décrite est une méthode globale s'appuyant sur une discrétisation de type « éléments finis » des champs de déplacement. La minimisation de l'écart à l'équilibre et de la différence quadratique des images entre l'image de référence et l'image déformée une fois corrigée du champ de déplacement courant pour un seul et même champ de déplacement permet de trouver un compromis entre les mesures obtenues par la CIN et l'identification, qui est optimisé par rapport aux paramètres {p} constitutifs recherchés. Les conditions aux limites, où les efforts transmis sont non-nuls, sont directement et exclusivement issues de la corrélation d'images. Cette méthode fournit une identification des lois de comportement, élastique puis non linéaire, en revenant à la coïncidence des images. Il convient cependant de souligner que la mesure des déplacements de bords est très affectée par le bruit et que l'utilisation d'une fonctionnelle quadratique fondée sur des dérivées secondes du déplacement U donnant lieu par la minimisation à un opérateur différentiel d'ordre 4, induit une sensibilité au bruit fortement exacerbée. Les exemples traités par cette méthode mettent clairement en évidence la forte croissance de l'erreur près des bords où la cinématique est imposée. Dans des situations moins favorables que celles utilisées dans la référence, ces conditions aux limites peuvent même empêcher la bonne détermination des propriétés mécaniques. On observe ainsi que, même si le couplage CIN/identification proposé répond à certaines des objections précédemment citées, d'autres faiblesses restent présentes pouvant limiter les capacités d'identification quantitative.

Plus précisément, l'invention a pour objet un procédé mis en oeuvre par ordinateur pour l'identification d'au moins un paramètre mécanique dit « paramètre recherché » d'un objet soumis à une sollicitation mécanique, caractérisé en ce que ledit procédé comporte les étapes suivantes :

- Etape 1 : Acquisitions par un moyen imageur d'au moins deux images de l'objet effectuées avant et pendant l'application de la sollicitation mécanique et mesure du facteur d'échelle de l'objet ;
- Etape 2: Calcul d'une première fonctionnelle $T_{CIN}(U_{CIN})$ correspondant à la corrélation des images numériques dépendant du champ de déplacement $U_{CIN}$ représenté à l'aide d'une première base cinématique, ledit champ de déplacement $U_{CIN}$ étant mesuré en tout point de l'objet sous sollicitations entre les images de l'objet sous chargement et hors chargement ;
- Etape 3 : Calcul du champ de déplacement calculé $U_{CAL}$ en tout point de l'objet ;
- Etape 4 : Calcul d'une seconde fonctionnelle $T_{CAL}(U_{CAL},\{p\},\{q\})$ à partir du champ de déplacement calculé $U_{CAL}$ représenté à l'aide d'une seconde base cinématique, cette seconde fonctionnelle correspondant à la formulation variationnelle d'une modélisation mécanique de la sollicitation dépendant de la géométrie de l'objet, des efforts appliqués, des conditions aux limites, d'au moins le paramètre recherché {p} et de paramètres mécaniques prédéterminés {q} ;
- Etape 5 : Calcul d'une troisième fonctionnelle $T_{PAR}(U_{CIN},U_{CAL})$ sous la forme d'une norme quadratique, égale à la différence entre $U_{CIN}$ et $U_{CAL}$ ;
- Etape 6 : Minimisation par rapport à $U_{CIN}$, $U_{CAL}$ et {p} d'une fonctionnelle totale $T_{TOT}(U_{CIN},U_{CAL},\{p\},\{q\})$ comprenant au moins les termes :

$$T_{TOT}(U_{CIN},U_{CAL},\{p\},\{q\}) = \alpha T_{CIN}(U_{CIN}) + \beta T_{CAL}(U_{CAL},\{p\},\{q\}) + \gamma T_{PAR}(U_{CIN},U_{CAL})$$

$\alpha$, $\beta$ et $\gamma$ étant trois coefficients de pondération non nuls, lesdits coefficients de pondération ($\alpha,\beta,\gamma$) étant ajustés selon les incertitudes associées aux différentes quantités intervenant dans les fonctionnelles, et/ou selon le conditionnement du problème tangent à la minimisation de la fonctionnelle $T_{TOT}$.

Avantageusement, lorsque le comportement de l'objet est soumis à une sollicitation dépendant du temps, la seconde fonctionnelle $T_{CAL}(U_{CAL}, \{p\}, \{q\})$ dépend d'instants déterminés.

Avantageusement, l'étape 1 du procédé comporte des mesures additionnelles $F_{MES}$ d'efforts, de temps ou de température, l'étape 3 du procédé comporte des évaluations $F_{CAL}$ correspondant aux dites mesures additionnelles, l'étape 4 est suivie d'une étape 4bis de calcul d'une quatrième fonctionnelle $T_{FOR}(F_{CAL}, F_{MES})$ proportionnelle à l'écart quadratique entre ces quantités et la fonctionnelle totale $T_{TOT}(U_{CIN}, U_{CAL}, \{p\}, \{q\})$ de l'étape 5 est égale à :

$$T_{TOT}(U_{CIN}, U_{CAL}, \{p\}, \{q\}) \ = \ \alpha T_{CIN}(U_{CIN}) \ + \ \beta T_{CAL}(U_{CAL}, \{p\}, \{q\}) \ +$$
$$\gamma T_{PAR}(U_{CIN}, U_{CAL}) + \chi T_{FOR}(F_{CAL}(\{p\}, \{q\}), F_{MES})$$

$\chi$ étant un quatrième coefficient de pondération ajusté selon les incertitudes associées aux différentes quantités intervenant dans les fonctionnelles, et/ou selon le conditionnement du problème tangent à la minimisation de la fonctionnelle $T_{TOT}$.

Avantageusement, la minimisation de la fonctionnelle totale $T_{TOT}$ est menée par méthode itérative, nécessitant ou non le calcul du gradient de $T_{TOT}$.

Avantageusement, la première base cinématique est identique à la seconde base cinématique.

Avantageusement, l'incertitude de mesure est estimée par le Hessien de la fonctionnelle $T_{TOT}$ à convergence en disposant d'une mesure du bruit d'acquisition.

Avantageusement, la première base cinématique ou la seconde base cinématique sont réalisées sur un maillage d'éléments finis.

L'invention a également pour objet un dispositif informatique adapté pour l'identification d'au moins un paramètre mécanique selon le procédé préalablement décrit.

L'invention a également pour objet un support lisible par ordinateur avec programme pour l'exécution du procédé selon le procédé préalablement décrit.

L'invention sera mieux comprise et d'autres avantages apparaîtront à la lecture de la description qui va suivre donnée à titre non limitatif et grâce aux figures annexées parmi lesquelles :

La figure 1 déjà décrite représente les différentes étapes de la représentation d'une sollicitation d'un échantillon avec suivi par la méthode de corrélation d'images numériques dite CIN ;
La figure 2 déjà décrite représente les différentes étapes de représentation d'une sollicitation d'un échantillon par la méthode de modélisation ;
La figure 3 déjà décrite représente les différentes étapes de l'optimisation des paramètres recherchés {p} tels que les propriétés mécaniques, la géométrie ou les conditions aux limites par la méthode itérative selon l'art antérieur ;
La figure 4 représente les différentes étapes de l'optimisation des paramètres recherchés par la méthode globale itérative selon l'invention.

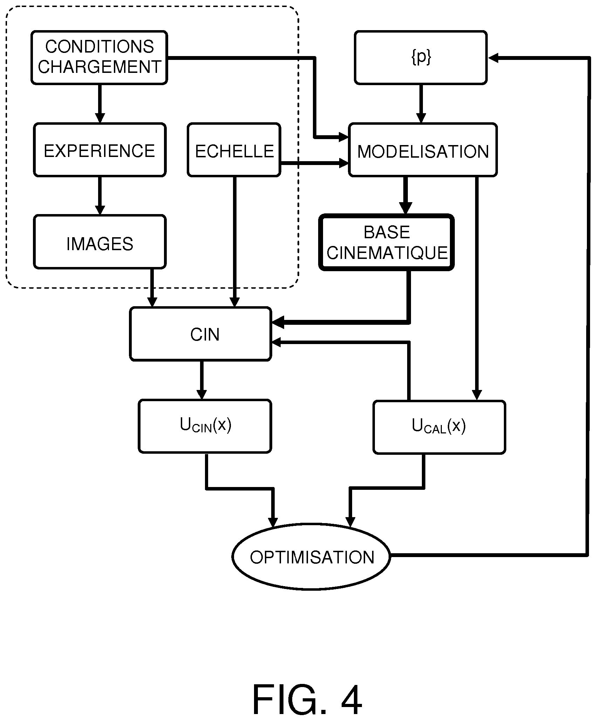

A titre d'exemple, la figure 4 représente les différentes étapes de l'optimisation des paramètres recherchés par la méthode globale itérative selon l'invention. Si l'on compare le procédé selon l'invention au procédé selon l'art antérieur de la figure 3, le changement essentiel entre les deux procédés est la position du calcul de la cinématique, notamment ce qui concerne les conditions aux limites. Dans le procédé selon l'invention, la modélisation intervient également sur cette cinématique qui n'est donc plus constante mais fait partie de la boucle d'optimisation.

Le procédé mis en oeuvre par ordinateur pour l'identification d'au moins un paramètre mécanique dit « paramètre recherché » d'un matériau constitutif d'une éprouvette ou d'une pièce soumis à une sollicitation mécanique connue selon l'invention comporte les étapes décrites ci-dessous.

Une première étape comprend les acquisitions d'images numériques de l'objet effectuées avant, pendant et, pour certaines applications, après l'application de la sollicitation mécanique, par un moyen imageur, et une mesure du facteur d'échelle de l'objet. En effet, la connaissance de l'échelle de l'échantillon est indispensable si l'on veut identifier des propriétés mécaniques ayant une dimension physique.

Les moyens imageurs peuvent être tout dispositif utilisé seul ou en combinaison permettant d'obtenir au moins une image de l'objet. Les images obtenues par lesdits moyens peuvent être des images optiques obtenues dans différentes gammes de longueurs d'ondes bien connues de l'homme du métier.

Dans un second temps, une première fonctionnelle $T_{CIN}$ est calculée à partir des images acquises avec la modalité choisie. Cette première fonctionnelle correspond à la corrélation des images numériques à partir du champ de déplacement $U_{CIN}$ représenté à l'aide d'une première base cinématique pertinente, par exemple, sur un maillage d'éléments finis.

Classiquement, cette première fonctionnelle est la somme sur la région d'étude de la différence quadratique entre image de référence et image(s) déformée(s) corrigée(s) du champ de déplacement, mais d'autres critères comme l'intercorrélation ou l'entropie d'information conjointe peuvent être choisis.

Cette première étape du procédé peut comporter des mesures additionnelles $F_{MES}$ comme des mesures d'effort, de temps ou de température.

Une troisième étape consiste à calculer le champ de déplacement calculé $U_{CAL}$ représenté à l'aide d'une seconde base cinématique, cette seconde fonctionnelle correspondant à la formulation variationnelle d'une modélisation mécanique de la sollicitation dépendant de la géométrie de l'objet, des efforts appliqués, des conditions aux limites, d'au moins les paramètres recherchés {p} et de paramètres mécaniques prédéterminés {q}.

En effet, le même essai mécanique peut être modélisé numériquement, soit par la méthode des éléments finis, soit par d'autres techniques pour calculer le champ de déplacement que l'on note alors $U_{CAL}(x)$.

Une quatrième étape consiste à calculer une seconde fonctionnelle $T_{CAL}(U, \{p\}, \{q\})$ dépendant du comportement mécanique du ou des matériau(x), de la géométrie de la pièce, des conditions aux limites incluant éventuellement les efforts appliqués et de l'instant ou des instants considéré(s) rassemblés sous la forme de paramètres recherchés {p} ou prédéterminés {q} et d'un jeu de valeurs nominales pour les paramètres recherchés. Cette quatrième étape du procédé peut comporter des évaluations d'effort, de temps ou de température $F_{CAL}$ correspondant aux mesures additionnelles $F_{MES}$, si elles sont disponibles, permettant de formuler une fonctionnelle additionnelle $T_{FOR}(F_{CAL}, F_{MES})$ proportionnelle à la différence quadratique de ces deux dernières quantités, éventuellement pondérées par l'inverse des variances des mesures.

Dans une cinquième étape, on introduit une troisième fonctionnelle $T_{PAR}(U_{CAL}, U_{CIN})$ sous la forme de la norme quadratique de la différence entre $U_{CIN}$ et $U_{CAL}$. Les deux champs de déplacement se confondent, ainsi que les autres quantités physiques mesurées et calculées si les paramètres recherchés sont bien identifiés et que les paramètres prédéterminés sont appropriés tout comme le modèle utilisé.

Ainsi, le principe de l'identification proposée est de minimiser, dans une dernière étape, la somme pondérée $T_{TOT}$ de ces trois ou quatre fonctionnelles :

$$T_{TOT}(U_{CIN}, U_{CAL}, \{p\}, \{q\}) = \alpha T_{CIN}(U_{CIN}) + \beta T_{CAL}(U_{CAL}V, \{p\}, \{q\}) + \gamma T_{PAR}(U_{CIN}, U_{CAL}) + \chi T_{FOR}(F_{CAL}(\{p\}, \{q\}), F_{MES})$$

par rapport aux deux champs de déplacements $U_{CAL}$ et $U_{CIN}$, ainsi qu'aux paramètres recherchés {p}. Cette fonctionnelle $T_{TOT}$ est réduite à ses trois premiers termes dans le cas où le procédé ne comporte pas de mesures additionnelles.

Il convient de noter que le problème peut rester mal posé si la gamme de sollicitations, la géométrie, ou encore la définition des images sont inadaptées. Dans cette circonstance, tous les paramètres recherchés ne peuvent pas être mesurés. Une régularisation de Tikhonov qui correspond à une pénalisation de l'écart entre paramètres identifiés et attendus peut être alors nécessaire pour permettre la résolution numérique du problème. La solution obtenue doit alors être jugée avec son incertitude propre, par exemple, en considérant l'effet du bruit de mesure préalablement caractérisé sur la minimisation de $T_{TOT}$, et sans prendre en compte la régularisation de Tikhonov.

Les coefficients de pondération ($\alpha$, $\beta$, $\gamma$, $\chi$) permettent de donner plus ou moins d'importance aux différents termes selon les incertitudes associées aux quantités intervenant dans les fonctionnelles et/ou selon le conditionnement du problème tangent à la minimisation de la fonctionnelle $T_{TOT}$. Il est à noter que l'un quelconque des poids choisis arbitrairement peut être fixé à 1.

Dans le cas où l'expression variationnelle du modèle mécanique n'est pas directement accessible, on note que la minimisation de la fonctionnelle $T_{PAR}$ par rapport à $U_{CAL}$ s'exprime simplement par exemple dans un code aux éléments finis par une liaison élastique linéaire donnant lieu en chaque noeud à une force nodale proportionnelle à l'écart entre $U_{CAL}$ et $U_{CIN}$. Ainsi par rapport à une modélisation par éléments finis réalisée avec un code de calcul professionnel courant, et pouvant inclure des lois de comportement arbitrairement complexes, la formulation proposée de $T_{TOT}$ dans sa minimisation par rapport à $U_{CAL}$ nécessite simplement l'introduction d'une liaison élastique linéaire additionnelle à chaque noeud du maillage. La solution obtenue sera exactement celle qui minimise la fonctionnelle totale à $U_{CIN}$, {p} et {q} fixes. En alternant les étapes de minimisation par rapport à différents sous-ensembles d'inconnues, il est possible d'atteindre la minimisation recherchée si le problème est bien posé.

Cette minimisation de la fonctionnelle $T_{TOT}$ peut être menée, par exemple, par une méthode de Newton-Raphson, via des linéarisations et corrections successives.

Avantageusement, le Hessien de la fonctionnelle $T_{TOT}$ à convergence permet d'estimer l'incertitude de mesure si l'on dispose d'une mesure du bruit d'acquisition, par exemple, via des acquisitions répétées hors sollicitations avant d'effectuer l'essai mécanique. En particulier, le caractère bien-posé du problème correspondant à des valeurs propres strictement positives et dans ce cas le conditionnement correspondant au rayon spectral du Hessien peuvent être appréciés. A défaut une régularisation de Tikhonov peut être proposée.

Avantageusement, ces éléments permettent en outre de valider ou non le modèle. En effet :

- le champ de déplacement $U_{CIN}$ permet d'estimer le champ de résidus de la corrélation d'images, c'est-à-dire la différence entre les images déformées et corrigées du champ de déplacement $U_{CIN}$ et l'image de référence ;
- la modélisation permet de valider que la loi de comportement et que les conditions d'équilibre sont satisfaites ;
- les mesures additionnelles éventuellement disponibles sont confrontées à celles issues de la modélisation ;
- les deux champs de déplacement, l'un proche de la mesure, $U_{CIN}$, et l'autre proche de la modélisation, $U_{CAL}$, sont associés au sein d'une seule et même fonctionnelle jaugeant la cohérence des deux approches.

Ainsi chacune des fonctionnelles utilisées apporte sa validation propre. Inversement des résidus trop importants pour être compatibles avec du bruit d'acquisition signalent des erreurs de modèle ou de mesures et fournissent des indications sur la manière d'enrichir le modèle interprétatif ou d'identifier des artéfacts de mesure non anticipés.

Avantageusement, le couplage des différents termes de la fonctionnelle permet de compenser le caractère mal posé ou mal conditionné de telle ou telle fonctionnelle. Par exemple une région de faible contraste ou d'éclairage insuffisant peut ne pas permettre la mesure de $U_{CIN}$ grâce à la seule fonctionnelle $T_{CIN}$. La fonctionnelle $T_{PAR}$ peut alors pallier le manque d'information par le calcul.

Symétriquement, lorsque la loi de comportement ou les non-linéarités géométriques induisent une perte de stabilité ou d'unicité de la solution de problème mécanique alors la fonctionnelle de couplage $T_{PAR}$ peut permettre de restaurer le caractère bien posé du problème et de suivre via la modélisation la même branche de bifurcation.

A convergence, la fonctionnelle totale atteint son minimum pour un champ de déplacement $U_{CIN}$, un champ de déplacement calculé $U_{CAL}$ distinct, des valeurs d'efforts, de temps ou de température ou d'autres quantités physiques de la modélisation $F_{CAL}$ et une estimation des paramètres recherchés $\{p\}$ pour l'identification proprement dite. Ces paramètres peuvent être des paramètres du matériau, concerner une ou plusieurs phases, ou la géométrie de l'objet ou d'autres quantités (p.ex., conditions aux limites).

Le procédé est mis en oeuvre par ordinateur permettant ainsi d'adapter pour l'identification d'au moins un paramètre mécanique selon le procédé préalablement décrit un dispositif informatique.

Par conséquent, la mise en oeuvre du procédé selon l'invention peut se faire essentiellement par des moyens de calcul numériques qui sont parfaitement réalisables par les outils informatiques actuels, mais qui permettent en pratique d'analyser une plus large gamme de matériaux, ou avec moins de matériel onéreux concernant en particulier la qualité du matériel d'acquisition pour un résultat final donné.

**Revendications**

1. Procédé mis en oeuvre par ordinateur pour l'identification d'au moins un paramètre mécanique dit « paramètre recherché » d'un objet soumis à une sollicitation mécanique, **caractérisé en ce que** ledit procédé comporte les étapes suivantes :

    - Etape 1 : Acquisitions par un moyen imageur d'au moins deux images de l'objet effectuées avant et pendant l'application de la sollicitation mécanique et mesure du facteur d'échelle de l'objet ;
    - Etape 2: Calcul d'une première fonctionnelle $T_{CIN}(U_{CIN})$ correspondant à la corrélation des images numériques dépendant du champ de déplacement $U_{CIN}$ représenté à l'aide d'une première base cinématique, ledit champ de déplacement $U_{CIN}$ étant mesuré en tout point de l'objet sous sollicitations entre les images de l'objet sous chargement et hors chargement ;
    - Etape 3 : Calcul du champ de déplacement calculé $U_{CAL}$ en tout point de l'objet ;
    - Etape 4 : Calcul d'une seconde fonctionnelle $T_{CAL}(U_{CAL},\{p\},\{q\})$ à partir du champ de déplacement calculé $U_{CAL}$ représenté à l'aide d'une seconde base cinématique, cette seconde fonctionnelle correspondant à la formulation variationnelle d'une modélisation mécanique de la sollicitation dépendant de la géométrie de l'objet, des efforts appliqués, des conditions aux limites, d'au moins le paramètre recherché $\{p\}$ et de paramètres mécaniques prédéterminés $\{q\}$ ;
    - Etape 5 : Calcul d'une troisième fonctionnelle $T_{PAR}(U_{CIN},U_{CAL})$ sous la forme d'une norme quadratique, égale à la différence entre $U_{CIN}$ et $U_{CAL}$ ;
    - Etape 6 : Minimisation par rapport à $U_{CIN}$, $U_{CAL}$ et $\{p\}$ d'une fonctionnelle totale $T_{TOT}(U_{CIN},U_{CAL},\{p\},\{q\})$ comprenant au moins les termes :

$$T_{TOT}(U_{CIN},U_{CAL},\{p\},\{q\}) = \alpha T_{CIN}(U_{CIN}) + \beta T_{CAL}(U_{CAL},\{p\},\{q\}) + \gamma T_{PAR}(U_{CIN},U_{CAL})$$

    - $\alpha$, $\beta$ et $\gamma$ étant trois coefficients de pondération non nuls

**2.** Procédé mis en oeuvre par ordinateur pour l'identification d'au moins un paramètre mécanique selon la revendication 1, **caractérisé en ce que**, lorsque le comportement de l'objet est soumis à une sollicitation dépendant du temps, la seconde fonctionnelle $T_{GAL}(U_{CAL}, \{p\}, \{q\})$ dépend d'instants déterminés.

**3.** Procédé mis en oeuvre par ordinateur pour l'identification d'au moins un paramètre mécanique selon l'une des revendications précédentes, **caractérisé en ce que**, l'étape 1 du procédé comporte des mesures additionnelles $F_{MES}$ d'efforts, de temps ou de températures, l'étape 3 du procédé comporte des évaluations $F_{CAL}$ correspondant aux dites mesures additionnelles, l'étape 4 est suivie d'une étape 4bis de calcul d'une quatrième fonctionnelle $T_{FOR}(F_{CAL}, F_{MES})$ proportionnelle à l'écart quadratique entre ces quantités et la fonctionnelle totale $T_{TOT}(U_{CIN}, U_{CAL}, \{p\}, \{q\})$ de l'étape 5 est égale à :

$$T_{TOT}(U_{CIN}, U_{CAL}, \{p\}, \{q\}) = \alpha T_{CIN}(U_{CIN}) + \beta T_{CAL}(U_{CAL}, \{p\}, \{q\}) + \gamma T_{PAR}(U_{CIN}, U_{CAL}) + \chi T_{FOR}(F_{CAL}(\{p\}, \{q\}), F_{MES})$$

$\chi$ étant un quatrième coefficient de pondération, ledit coefficient de pondération $\chi$ est ajusté selon les incertitudes associées aux différentes quantités intervenant dans les fonctionnelles, et/ou selon le conditionnement du problème tangent à la minimisation de la fonctionnelle $T_{TOT}$.

**4.** Procédé mis en oeuvre par ordinateur pour l'identification d'au moins un paramètre mécanique selon l'une des revendications précédentes, **caractérisé en ce que** la minimisation de la fonctionnelle totale $T_{TOT}$ est menée par méthode itérative.

**5.** Procédé mis en oeuvre par ordinateur pour l'identification d'au moins un paramètre mécanique selon l'une des revendications 1 à 3 **caractérisé en ce que** la minimisation de la fonctionnelle totale $T_{TOT}$ est menée par méthode itérative, nécessitant le calcul du gradient de $T_{TOT}$.

**6.** Procédé mis en oeuvre par ordinateur pour l'identification d'au moins un paramètre mécanique selon l'une des revendications précédentes, **caractérisé en ce que** la première base cinématique est identique à la seconde base cinématique.

**7.** Procédé mis en oeuvre par ordinateur pour l'identification d'au moins un paramètre mécanique selon l'une des revendications précédentes, **caractérisé en ce que** l'incertitude de mesure est estimée par le Hessien de la fonctionnelle $T_{TOT}$ à convergence en disposant d'une mesure du bruit d'acquisition.

**8.** Procédé mis en oeuvre par ordinateur pour l'identification d'au moins un paramètre mécanique selon l'une des revendications précédentes, **caractérisé en ce que** la première base cinématique ou la seconde base cinématique sont réalisées sur un maillage d'éléments finis.

**9.** Dispositif informatique adapté pour l'identification d'au moins un paramètre mécanique selon l'une des revendications 1 à 8.

**10.** Support lisible par ordinateur avec programme pour l'exécution du procédé selon l'une des revendications 1 à 8.

**Patentansprüche**

**1.** Computerimplementiertes Verfahren zum Identifizieren mindestens eines mechanischen Parameters, "Suchparameter" genannt, eines einer mechanischen Beanspruchung ausgesetzten Objekts, **dadurch gekennzeichnet, dass** das Verfahren die folgenden Schritte beinhaltet:

- Schritt 1: Aufnehmen, durch ein Bildaufnahmemittel, von mindestens zwei Bildern des Objekts vor dem und während des Applizieren(s) der mechanischen Beanspruchung und Messen des Maßstabsfaktors des Objekts;
- Schritt 2: Berechnen eines ersten Funktionals $T_{CIN}(U_{CIN})$ entsprechend der Korrelation der digitalen Bilder, die von dem Bewegungsfeld $U_{CIN}$ abhängen, das mit Hilfe einer ersten kinematischen Basis dargestellt wird, wobei das Bewegungsfeld $U_{CIN}$ an jedem Punkt des beanspruchten Objekts zwischen den Bildern des Objekts unter Belastung und ohne Belastung gemessen wird;
- Schritt 3: Berechnen des berechneten Bewegungsfeldes $U_{CAL}$ an jedem Punkt des Objekts;

- Schritt 4: Berechnen eines zweiten Funktionals $T_{CAL}(U_{CAL},\{p\},\{q\})$ auf der Basis des berechneten Bewegungsfeldes $U_{CAL}$, das mit Hilfe einer zweiten kinematischen Basis dargestellt wird, wobei dieses zweite Funktional der Variationsformulierung einer mechanischen Modellierung der Beanspruchung in Abhängkeit von der Geometrie des Objekts, den angewandten Kräften, den Randbedingungen, mindestens dem Suchparameter $\{p\}$ und vorbestimmten mechanischen Parametern $\{q\}$ entspricht;
- Schritt 5: Berechnen eines dritten Funktionals $T_{PAR}(U_{CIN}, U_{CAL})$ in Form einer quadratischen Norm gleich der Differenz zwischen $U_{CIN}$ und $U_{CAL}$;
- Schritt 6: Minimieren eines Gesamtfunktionals $T_{TOT}(U_{CIN},U_{CAL},\{p\},\{q\})$ in Bezug auf $U_{CIN}$, $U_{CAL}$ und $\{p\}$, das mindestens die folgenden Terme umfasst:

$$T_{TOT}(U_{CIN},U_{CAL},\{\ p\ \},\{\ q\ \}) = \alpha T_{CIN}(U_{CIN}) + \beta T_{CAL}(U_{CAL},\{p\},\{q\}) + \gamma T_{PAR}(U_{CIN},U_{CAL})$$

- wobei $\alpha$, $\beta$ und $\gamma$ drei Gewichtungskoeffizienten von ungleich Null sind.

2. Computerimplementiertes Verfahren zum Identifizieren mindestens eines mechanischen Parameters nach Anspruch 1, **dadurch gekennzeichnet, dass**, wenn das Verhalten des Objekts einer zeitabhängigen Beanspruchung ausgesetzt ist, das zweite Funktional $T_{CAL}(U_{CAL}, \{p\}, \{q\})$ von bestimmten Zeitpunkten abhängt.

3. Computerimplementiertes Verfahren zum Identifizieren mindestens eines mechanischen Parameters nach einem der vorherigen Ansprüche, **dadurch gekennzeichnet, dass** Schritt 1 des Verfahrens zusätzliche Messungen $F_{MES}$ von Kräften, Zeiten oder Temperaturen beinhaltet, Schritt 3 des Verfahrens Bewertungen $F_{CAL}$ beinhaltet, die den zusätzlichen Messungen entsprechen, Schritt 4 von einem Schritt 4bis des Berechnens eines vierten Funktionals $T_{FOR}(F_{CAL}, F_{MES})$ proportional zur quadratischen Abweichung zwischen diesen Größen gefolgt wird, und das Gesamtfunktional $T_{TOT}(U_{CIN},U_{CAL},\{p\},\{q\})$ aus Schritt 5 gleich:

$$T_{TOT}(U_{CIN},U_{CAL},\{p\},\{q\}) = \alpha T_{CIN}(U_{CIN}) + \beta T_{CAL}(U_{CAL},\{p\},\{q\}) + \gamma T_{PAR}(U_{CIN},U_{CAL}) + \chi T_{FOR}(F_{CAL}(\{p\},\{q\}),F_{MES})\text{ ist,}$$

wobei $\chi$ ein vierter Gewichtungskoeffizient ist, wobei der Gewichtungskoeffizient $\chi$ gemäß den Unsicherheiten, die mit den verschiedenen in die Funktionale einfließenden Größen assoziiert sind, und/oder gemäß der Konditionierung des Problems tangential zur Minimierung des Funktionals angepasst wird.

4. Computerimplementiertes Verfahren zum Identifizieren mindestens eines mechanischen Parameters nach einem der vorhergehenden Ansprüche, **dadurch gekennzeichnet, dass** die Minimierung des Gesamtfunktionals durch eine iterative Methode durchgeführt wird.

5. Computerimplementiertes Verfahren zum Identifizieren mindestens eines mechanischen Parameters nach einem der Ansprüche 1 bis 3, **dadurch gekennzeichnet, dass** die Minimierung des Gesamtfunktionals durch eine iterative Methode durchgeführt wird, die die Berechnung des Gradienten von erfordert.

6. Computerimplementiertes Verfahren zum Identifizieren mindestens eines mechanischen Parameters nach einem der vorhergehenden Ansprüche, **dadurch gekennzeichnet, dass** die erste kinematische Basis identisch mit der zweiten kinematischen Basis ist.

7. Computerimplementiertes Verfahren zum Identifizieren mindestens eines mechanischen Parameters nach einem der vorhergehenden Ansprüche, **dadurch gekennzeichnet, dass** die Messunsicherheit durch den Hessischen Wert des Konvergenzfunktionals unter Nutzung eines Erfassungsrauschmesswerts geschätzt wird.

8. Computerimplementiertes Verfahren zum Identifizieren mindestens eines mechanischen Parameters nach einem der vorhergehenden Ansprüche, **dadurch gekennzeichnet, dass** die erste kinematische Basis oder die zweite kinematische Basis auf einem Finite-Elemente-Netz realisiert werden.

9. Computergerät, ausgelegt zum Identifizieren mindestens eines mechanischen Parameters nach einem der Ansprüche 1 bis 8.

10. Computerlesbares Medium mit einem Programm zur Durchführung des Verfahrens nach einem der Ansprüche 1 bis 8.

**Claims**

1. A computer-implemented method for identifying at least one mechanical parameter called "target parameter" of an object subjected to a mechanical stress, **characterized in that** said method comprises the following steps:

   - Step 1: acquiring, by an imaging means, at least two images of the object taken before and during the application of the mechanical stress and measuring the scale factor of the object;
   - Step 2: calculating a first functional $T_{CIN}(U_{CIN})$ corresponding to the correlation of the digital images depending on the displacement field $U_{CIN}$ represented using a first kinematic base, said displacement field $U_{CIN}$ being measured at any point of the object under stress between the images of the object under load and without load;
   - Step 3: calculating the calculated displacement field $U_{CAL}$ at any point of the object;
   - Step 4: calculating a second functional $T_{CAL}(U_{CAL},\{p\},\{q\})$ on the basis of the calculated displacement field $U_{CAL}$ represented using a second kinematic base, this second functional corresponding to the variational formulation of a mechanical model of the stress depending on the geometry of the object, the forces applied, the boundary conditions, at least the target parameter $\{p\}$ and predetermined mechanical parameters $\{q\}$;
   - Step 5: calculating a third functional $T_{PAR}(U_{CIN},U_{CAL})$ in the form of a quadratic norm, equal to the difference between $U_{CIN}$ and $U_{CAL}$;
   - Step 6: minimizing, with respect to $U_{CIN}$, $U_{CAL}$ and $\{p\}$, a total functional $T_{TOT}(U_{CIN},U_{CAL},\{p\},\{q\})$ comprising at least the terms:

   $$T_{TOT}(U_{CIN},U_{CAL},\{p\},\{q\}) = \alpha T_{CIN}(U_{CIN}) + \beta T_{CAL}(U_{CAL},\{p\},\{q\}) + \gamma T_{PAR}(U_{CIN},U_{CAL})$$

   - $\alpha$, $\beta$ and $\gamma$ being three non-zero weighting coefficients.

2. The computer-implemented method for identifying at least one mechanical parameter according to claim 1, **characterized in that**, when the behavior of the object is subjected to a time-dependent stress, the second functional $T_{CAL}(U_{CAL}, \{p\}, \{q\})$ is dependent on determined times.

3. The computer-implemented method for identifying at least one mechanical parameter according to any one of the preceding claims, **characterized in that** step 1 of the method comprises additional measurements $F_{MES}$ of forces, times or temperatures, step 3 of the method comprises evaluations $F_{CAL}$ corresponding to said additional measurements, step 4 is followed by a step 4bis of calculating a fourth functional $T_{FOR}(F_{CAL},F_{MES})$ proportional to the quadratic deviation between these quantities and the total functional $T_{TOT}(U_{CIN},U_{CAL},\{p\},\{q\})$ of step 5 is equal to:

   $$T_{TOT}(U_{CIN},U_{CAL},\{p\},\{q\}) = \alpha T_{CIN}(U_{CIN}) + \beta T_{CAL}(U_{CAL},\{p\},\{q\}) + \gamma T_{PAR}(U_{CIN},U_{CAL}) + \chi T_{FOR}(F_{CAL}(\{p\},\{q\}),F_{MES})$$

   $\chi$ being a fourth weighting coefficient, said weighting coefficient $\chi$ is adjusted according to the uncertainties associated with the various quantities involved in the functionals, and/or according to the conditioning of the problem tangent to the minimization of the functional $T_{TOT}$.

4. The computer-implemented method for identifying at least one mechanical parameter according to any one of the preceding claims, **characterized in that** the minimization of the total functional $T_{TOT}$ is carried out by iterative method.

5. The computer-implemented method for identifying at least one mechanical parameter according to any one of claims 1 to 3, **characterized in that** the minimization of the total functional $T_{TOT}$ is carried out by iterative method, requiring the calculation of the gradient of $T_{TOT}$.

6. The computer-implemented method for identifying at least one mechanical parameter according to anyone of the preceding claims, **characterized in that** the first kinematic base is identical to the second kinematic base.

7. The computer-implemented method for identifying at least one mechanical parameter according to any one of the preceding claims, **characterized in that** the measurement uncertainty is estimated by the Hessian of the functional $T_{TOT}$ with convergence by having a measurement of the acquisition noise available.

8. The computer-implemented method for identifying at least one mechanical parameter according to any one of the preceding claims, **characterized in that** the first kinematic base or the second kinematic base is produced on a finite element mesh.

9. A computer device suitable for identifying at least one mechanical parameter according to anyone of claims 1 to 8.

10. A computer-readable medium with program for executing the method according to any one of claims 1 to 8.

CONDITIONS
CHARGEMENT

EXPERIENCE

ECHELLE

IMAGES

BASE
CINEMATIQUE

CIN

$U_{CIN}(x)$

# FIG. 1

CONDITIONS
CHARGEMENT

{p}

ECHELLE

MODELISATION

$U_{CAL}(x)$

# FIG. 2

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7257244 B

**Littérature non-brevet citée dans la description**

- **MA SUTTON ; JJ ORTEU ; H SCHREIER.** Image corrélation for shape, motion and déformation measurements: basic concepts, theory and applications. Springer, 2009
- **J. RÉTHORÉ.** A fully integrated noise robust strategy for the identification of constitutive laws from digital images. *Int. J. Num. Meth. Eng.,* 2010, vol. 84, 631-660
- An extended and integrated digital image correlation technique applied to the analysis of fractured samples : The equilibrium gap method as a mechanical filter. **JULIEN RÉTHORÉ et al.** EUROPEAN JOURNAL OF COMPUTATIONAL MECHANICS. REVUE EUROPÉENNE DE MÉCANIQUE NUMÉRIQUE, 2009, vol. 18, 285-306
- Identification of damage and cracking behaviours based on energy dissipation mode analysis in a quasi-brittle material using digital image correlation. **PAUL LEPLAY et al.** INTERNATIONAL JOURNAL OF FRACTURE. KLUWER ACADEMIC PUBLISHERS, 04 Octobre 2011, vol. 171, 35-50
- **AVRIL et al.** General framework for the identification of constitutive parameters from full-field measurements in linear elasticity. *INTERNATIONAL JOURNAL OF SOLIDS AND STRUCTURES,* 30 Mars 2007, vol. 44 (14-15), 4978-5002